# EUROPEAN PATENT APPLICATION

(11) **EP 4 538 253 A1**
(43) Date of publication of application: **16.04.2025**
(21) Application number: 24203048.4
(22) Date of filing: 26.09.2024
(51) Int. Cl.: C04B 35/83, C04B 41/00, F16D 69/02, F16D 65/12

(54) **CERAMIC MODIFICATION OF C/C BRAKES WITHIN A FURNACE RUN**

(30) Priority: 09.10.2023 US 202318483367
(71) Applicant: Goodrich Corporation, Charlotte, NC 28217 (US)
(72) Inventor: JARMAN, Jecee, Pueblo (US); FREDERICK, Christopher, Pueblo (US)
(74) Representative: Dehns

(57) **Abstract**

A method for decreasing wear rate of a brake stack or a heat sink and increasing a brake life of the brake stack or the heat sink is disclosed herein. The method includes applying a thin film to a wear surface of a C/C substrate, the thin film including a ceramic tape, thereby forming a coated wear surface, wherein the ceramic tape comprises at least one of nano ceramic binary oxide particulates, doped nano ceramic binary oxide particulates, or nano ceramic ternary oxide particulates, heating the coated wear surface to bond the ceramic tape to the wear surface of the C/C substrate, and installing the coated wear surface of the C/C substrate to a multi-disk brake system.

## Description

### FIELD

The present disclosure generally relates to aircraft braking systems and, more specifically, to ceramic particulate coatings for wear improvement of the aircraft braking system.

### BACKGROUND

Aircraft typically utilize brake systems on wheels to slow or stop the aircraft during landings, taxiing, and rejected takeoffs. The brake systems generally employ a brake stack or heat sink comprising a series of friction disks that may be forced into sliding contact with one another during brake actuation to slow or stop the aircraft. The brake stack typically comprises rotor disks and stator disks that, in response to axial compressive loads, convert the kinetic energy of the aircraft into heat through frictional forces experienced between the friction disks.

### SUMMARY

Disclosed herein is a method for decreasing wear rate of a brake stack or a heat sink and increasing a brake life of the brake stack or the heat sink, including applying a thin film of ceramic oxide to a wear surface, the thin film including a tape casted ceramic tape, thereby forming a coated wear surface, wherein the ceramic solution comprises at least one of nano ceramic binary oxide particulates, doped nano ceramic binary oxide particulates, or nano ceramic ternary oxide particulates and installing the coated wear surface to a multi-disk brake system. Disclosed herein is a method for decreasing wear rate of a carbon/carbon (C/C) brake stack or a heat sink and increasing a brake life of the C/C brake stack or the heat sink, comprising: applying a thin film to a wear surface of a C/C substrate, the thin film including a ceramic tape, thereby forming a coated wear surface, wherein the ceramic tape comprises at least one of nano ceramic binary oxide particulates, doped nano ceramic binary oxide particulates, or nano ceramic ternary oxide particulates; and heating the coated wear surface to bond the ceramic tape to the wear surface of the C/C substrate. In various embodiments, the wear surface is a carbon/carbon (C/C) disk. In various embodiments, the C/C substrate is a densified C/C disk or C/C wear liner, wherein the C/C wear liner is configured to be mechanically attached to a ceramic matrix composite core material after heating the coated wear surface. In various embodiments, the ceramic tape is about 10/1000 inch (about 0.0254 centimeter) to about 25/1000 inch (about 0.0635 centimeter) thick on the wear surface, e.g. on the wear surface of the C/C substrate. In various embodiments, heating the coated wear surface includes heating the coated wear surface to a temperature of about 400° to about 600°C for about 0.5 hours to about 4 hours. In various embodiments, the nano ceramic binary oxide particulates comprise at least one of zirconium oxide (ZrO₂), aluminum oxide (Al₂O₃), or magnesium oxide (MgO). In various embodiments, the nano ceramic binary oxide particulates comprise at least one of lithium oxide (Li₂O), beryllium oxide (BeO), calcium oxide (CaO), strontium oxide (SrO), or barium oxide (BaO). In various embodiments, the nano ceramic binary oxide particulates comprise at least one of scandium(III) oxide (Sc₂O₃), yttrium oxide (Y₂O₃), cobalt(II) oxide (CoO), or nickel oxide (NiO). In various embodiments, the nano ceramic binary oxide particulates comprise at least one of silicon oxide (SiO₂), titanium oxide (TiO₂), or hafnium(IV) oxide (HfO₂). In various embodiments, the nano ceramic binary oxide particulates comprise at least one of vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃). In various embodiments, the nano ceramic binary oxide particulates comprise at least one of silicon oxide (SiO₂), titanium oxide (TiO₂), or hafnium(IV) oxide (HfO₂). In various embodiments, the nano ceramic binary oxide particulates comprise at least one of gallium oxide (GaO), indium oxide (In₂O₃), or tin(IV) oxide (SnO₂). In various embodiments, the nano ceramic binary oxide particulates comprise at least one of lanthanum oxide (La₂O₃), cerium dioxide (CeO₂), praseodymium(III,IV) oxide (Pr₆O₁₁), or neodymium oxide (Nd₂O₃). In various embodiments, the nano ceramic binary oxide particulates comprise at least one of samarium oxide (Sm₂O₃), europium oxide (Eu₂O₃), gadolinium oxide (Gd₂O₃), terbium oxide (Tb₂O₃), or dysprosium oxide (Dy₂O₃). In various embodiments, the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃). In various embodiments, the doped nano ceramic binary oxide particulates comprise at least one of yttrium oxide stabilized zirconium(IV) oxide (YSZ) or zirconium(IV) oxide toughened aluminum oxide (ZTA). In various embodiments, the nano ceramic ternary oxide particulates comprise at least one of lithium silicate (Li₂SiO₃), mullite (Si₂Al₆O₁₃), calcium silicate (Ca₂SiO₄), or hafnium orthosilicate (HfSiO₄). In various embodiments, the nano ceramic ternary oxide particulates comprise at least one of lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiO₄). In various embodiments, the nano ceramic ternary oxide particulates comprise at least one of strontium zirconate (SrZrO₃) or barium zirconate (BaZrO₃).

In various embodiments, the method further includes heating the coated wear surface to a first temperature and heating the coated wear surface to a second temperature.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a multi-disk brake system, in accordance with various embodiments.
FIG. 2 illustrates a fibrous preform utilized to manufacture a carbon/carbon (C/C) disk, in accordance with various embodiments.
FIG. 3 illustrates a fibrous preform utilized to manufacture a carbon/carbon (C/C) disk in a carbonization furnace, in accordance with various embodiments.
FIG. 4 illustrates a flowchart a method for decreasing brake stack or heat sink wear rate of a densified C/C substrate and, thus, increasing brake stack or heat sink brake life of the densified C/C substrate, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Carbon/carbon (C/C) composites and based ceramic matrix composites (CMCs) have found use in the aerospace and other industries for fabricating brake stacks and heat sinks. Multiple variations of brake stacks and heat sink configurations exist including C/C and core-liner configurations. In core-liners where a CMC core is utilized, the CMC is not currently designed to function as a wearing material itself and instead provides thermal management in the brake stack or heat sink. This creates the need for wear liners or wear coatings/layers on the CMC to prevent degradation of the CMC core. Wear liners function as a source which develops beneficial wear debris that lubricates the brake stack or heat sink during operation while wear coatings/layers provides a wear-resistant material which can be ground away and replaced with new coatings as needed. These brake stacks or heat sinks may utilize a core-liner concept (CMC core, C/C wear liner). By itself, carbon provides good wear resistance, but only 50-60% of the core-liner will be used before being discarded. Although less of the total disk will need to be replaced, 40-50% of the manufactured carbon may be wasted in the current core-liner setup so extending the life of the wear liners will extend total brake life, similar to extending brake life in entirely C/C disk brake stacks or heat sinks.

Provided herein, according to various embodiments, are manufacturing system(s) and method(s) for decreasing brake stack or heat sink wear rate and thus, increasing brake stack or heat sink brake life. In various embodiments, a brake disk is received. In various embodiments, where the brake disk is a C/C disk, a surface of the C/C disk may be modified with nano ceramic binary oxide, doped nano ceramic binary oxide, or nano ceramic ternary oxide particulates which is suspended in a ceramic solution known as a "sol." In various embodiments, the sol may be applied via numerous routes such as tape casting, among others, but is generally applied in small quantities at the disk surfaces like a surface coating. In various embodiments, during the operation of the brake, the nano ceramic binary oxide, doped nano ceramic binary oxide, or nano ceramic ternary oxide is mixed into the carbon wear debris as its generated which then has the ability to drastically reduce wear rates and increase brake life. In various embodiments, when other carbon wear debris oxidizes away, the already oxidized ceramics remain without needing to be regenerated like current carbon wear debris and may regenerate carbon wear debris quickly to assist in brake lubrication.

In various embodiments, wear surfaces of the carbon substrate are coated with a ceramic solution of at least one of a nano ceramic binary oxide, doped nano ceramic binary oxide, or nano ceramic ternary oxide particulates suspended therein. In various embodiments, this modification provides for managing friction between another coated wear surface or even against an uncoated wear surface. In that regard, in various embodiments, wear surfaces of a carbon substrate may further be modified with a ceramic solution to manage friction in the C/C substrates. In various embodiments, wear surfaces of wear liners may further be modified with a ceramic solution in order to manage friction in response to the ceramic solution coated wear liner surface wearing against a carbon surface of an uncoated C/C substrate.

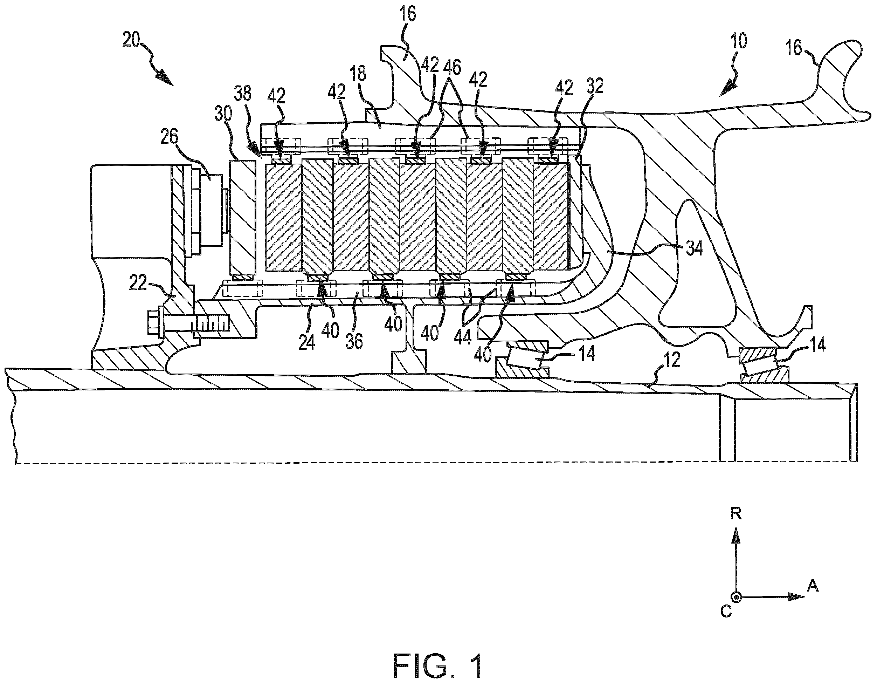

Referring now to FIG. 1, a multi-disk brake system 20 is illustrated, in accordance with various embodiments. The system may include a wheel 10 supported for rotation around axle 12 by bearings 14. Axle 12 defines an axis of multi-disk brake system 20 and the various components thereof. Any reference to the terms axis and axial may include an axis of rotation defined by axle 12 or a dimension parallel to such axis. Wheel 10 includes rims 16 for supporting a tire, and a series of axially extending rotor splines 18 (one shown). Rotation of wheel 10 is modulated by multi-disk brake system 20. Multi-disk brake system 20 includes torque flange 22, torque tube 24, a plurality of pistons 26 (one shown), pressure plate 30, and end plate 32. Torque tube 24 may be an elongated annular structure that includes reaction plate 34 and a series of axially extending stator splines 36 (one shown). Reaction plate 34 and stator splines 36 may be integral with torque tube 24, as shown in FIG. 1, or attached as separate components.

Multi-disk brake system 20 also includes a plurality of friction disks 38. The plurality of friction disks 38 includes at least one non-rotatable friction disk (stator) 40, and at least one rotatable friction disk (rotor) 42. Stators 40 may include a carbon/carbon (C/C) disk. Rotors 42 may include a carbon/carbon (C/C) disk. Each friction disk 38 includes an attachment structure. For example, stators 40 include a plurality of stator lugs 44 at circumferentially spaced positions around an inner circumference of stators 40, and rotors 42 include a plurality of rotor lugs 46 at circumferentially spaced positions around an outer circumference of rotors 42.

Torque flange 22 is mounted to axle 12. Torque tube 24 is bolted to torque flange 22 such that reaction plate 34 is near an axial center of wheel 10. End plate 32 is connected to a surface of reaction plate 34 facing axially away from the axial center of wheel 10. Thus, end plate 32 is non-rotatable by virtue of its connection to torque tube 24. Stator splines 36 may support the pressure plate 30 such that pressure plate 30 is also non-rotatable. Stator splines 36 also support the stators 40. Stators 40 engage stator splines 36 with gaps formed between stator lugs 44. Similarly, rotors 42 engage rotor splines 18 with gaps formed between rotor lugs 46. Thus, rotors 42 are rotatable by virtue of their engagement with rotor splines 18 of wheel 10.

In various embodiments, rotors 42 are arranged with end plate 32 on one end, pressure plate 30 on the other end, and stators 40 interleaved such that rotors 42 are adjacent to non-rotatable friction components. Pistons 26 are connected to torque flange 22 at circumferentially spaced positions around torque flange 22. Pistons 26 face axially toward wheel 10 and contact a side of pressure plate 30 opposite rotors 42. Pistons 26 may be powered electrically, hydraulically, or pneumatically. In response to actuation of pistons 26, a force towards reaction plate 34 is exerted on friction disks 38 such that rotors 42 and stators 40 are pressed together between pressure plate 30 and end plate 32.

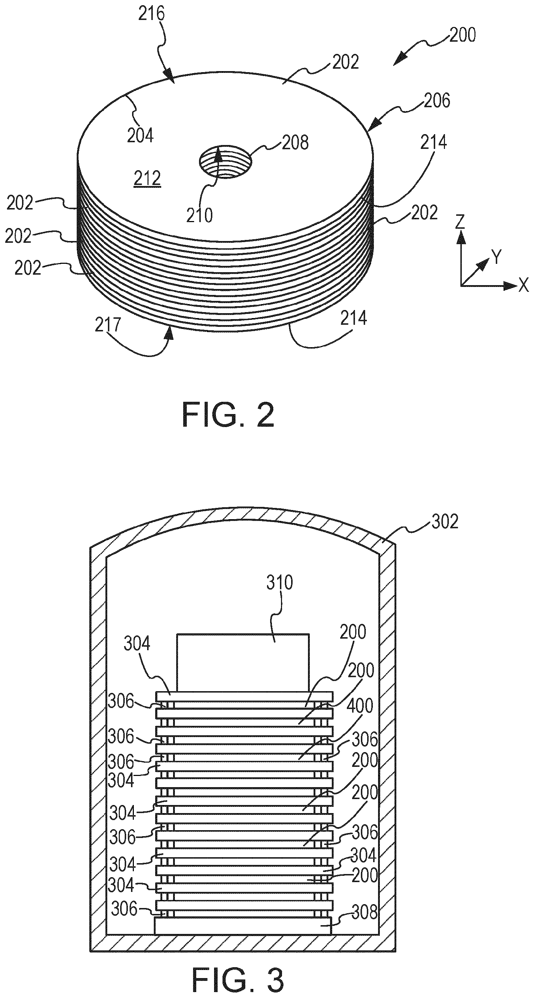

Referring now to FIG. 2, a fibrous preform 200 utilized to manufacture a carbon/carbon (C/C) disk is illustrated, in accordance with various embodiments. Fibrous preform 200 may be employed to form a stator 40 or a rotor 42, as described above. Fibrous preform 200 may comprise a porous structure comprised of a plurality of stacked textile layers 202. Each textile layer 202 having a thickness in a first dimension (i.e., the Z-direction) that may be substantially less than a thickness of the layer 202 in the other two dimensions (i.e., the X-direction and the Y-direction). As used herein, the "in-plane" direction refers to directions parallel to the thicker two dimensions (i.e., parallel to the X and Y directions and perpendicular to the Z-direction).

A porous structure may comprise any structure derived from a fibrous material such as carbon fibers or the like. In various embodiments, the carbon fibers may be derived from polyacrylonitrile (PAN), rayon (synthetic fiber derived from cellulose), oxidized polyacrylonitrile fiber (OPF), pitch, or the like. The starting fiber may be pre-oxidized PAN or fully carbonized commercial carbon fiber. Fibrous preform 200 may be prepared by needling the textile layers 202 of fibrous preform 200. Needling the textile layers 202 of fibrous preform 200 tends to push fibers from one layer 202 to the next layer 202, thereby forming z-fibers that extend axially across the layers 202. Needling pulls fibers from the in-plane direction and forces the fibers into the z-fiber direction. After needling, fibrous preform 200 may comprise fibers extending in three different directions: the radial direction, the circumferential direction, and the axial direction (or the X, Y, and Z directions).

Fibrous preform 200 may be fabricated using a net shape preforming technology or may be cut from a needled board. Fibrous preform 200 may be a lay-up of woven, braided or knitted textile layers 202. The fibrous material may be in the form of chopped carbon fibers molded to form layers 202. Prior to the densification process, the fibrous material may be formed into a preform having any desired shape or form. For example, the fibrous preform may be in the form of a disk having any shape such as, for example, a polygon, a cylinder, a triangle, annular, square, rectangle, pentagon, hexagon, octagon, or the like. In various embodiments, layers 202 and fibrous preform 200 may have a generally annular shape. In accordance with various embodiments, the outer circumferential (or outer perimeter) surfaces 204 of layers 202 may form an outer diameter (OD) 206 of fibrous preform 200, and the inner circumferential (or inner perimeter) surfaces 208 of layers 202 may form an inner diameter (ID) 210 of fibrous preform 200. Each layer 202 includes a first axial face 212 and a second axial face 214 opposite the first axial face 212. First and second axial faces 212, 214 extend from outer circumferential surface 204 to inner circumferential surface 208. Layers 202 are stacked such that the first axial face 212 of one layer 202 is oriented toward the second axial face 214 of the adjacent layer 202. First axial face 212 of the uppermost layer 202 forms the upper axial end 216 of fibrous preform 200 and the second axial face 214 of the bottommost layer 202 forms the lower axial end 217 of fibrous preform 200 (i.e., the two layers 202 that are farther apart from one another in the axial direction form the axial ends 216, 217 of the fibrous preform).

Referring now to FIG. 3, fibrous preform 200 utilized to manufacture a carbon/carbon (C/C) disk being placed in a carbonization furnace 302 for carbonization is illustrated, in accordance with various embodiments. The carbonization process may be employed to convert the fibers of the fibrous preforms 200 into pure carbon fibers, as used herein only "pure carbon fibers" means carbon fibers comprised of at least 99% carbon. The carbonization process is distinguished from the densification process described below in that the densification process involves infiltrating the pores of the fibrous preform 200 and depositing a matrix (e.g., carbon, phenolic resin, or any other desired matrix material) within and around the carbon fibers of the fibrous preform, and the carbonization process refers to the process of converting the fibers of the fibrous preform 200 into pure carbon fibers.

In various embodiments, a plurality of fibrous preforms 200 may be placed on top of one another with separator plates 304 and spacing stops 306 disposed between adjacent fibrous preforms 200. For example, the bottommost fibrous preform 200 may be placed on a base plate 308 at the bottom of carbonization furnace 302. A separator plate 304 may be placed on top of the bottommost fibrous preform 200. Another fibrous preform 200 may then be placed on the separator plate 304, and another separator plate 304 may be placed on that fibrous preform 200. A stack of fibrous preforms 200 and separator plates 304 may be constructed in this manner, with each fibrous preform 200 being separated from superjacent and subjacent fibrous preforms 200 by separator plates 304. Spacing stops 306 may be placed between each of the separator plates 304. The spacing stops 306 may comprise a height that is less than the thickness of the fibrous preform 200 prior to carbonization. Spacing stops 306 may define a target thickness of the fibrous preform 200 after carbonization. In that regard, after the stack of fibrous preforms 200 is constructed, and before the carbonization process has started, gaps may exist between the spacing stops 306 and adjacent separator plates 304. During carbonization, a compressive load may be applied to the fibrous preforms 200, thereby compressing the fibrous preforms 200 until spacing stops 306 contact adjacent separator plates 304.

In various embodiments, compressive pressure may be applied to fibrous preforms 200 during the carbonization. The compressive pressure may be applied by placing a weight 310 over fibrous preforms 200, or by applying a compressive load to the fibrous preforms 200 by other suitable means. The compressive pressure may be applied along the direction of the z-fibers. It will be appreciated by those skilled in the art that the mass of weight 310 and/or the compressive force generated by weight 310 may vary depending on the size of fibrous preforms 200, the pre-carbonization fiber volume of fibrous preforms 200, the desired post-carbonization fiber volume of fibrous preforms 200, and/or the number fibrous preforms 200 being compressed. As used herein, "fiber volume" refers the percentage of the total volume of the fibrous preform that is formed by the fibers of the fibrous preform. For example, a fiber volume of 18% means the fibers of the fibrous preform form 18% of the total volume of fibrous preform. In various embodiments, after carbonization, fibrous preform 200 includes a fiber volume of between 10% and 30%. In various embodiments, after carbonization, fibrous preform 200 includes a fiber volume of between 15% and 25%. In various embodiments, fibrous preforms 200 having a low fiber volume may be desirable for the infiltration methods disclosed herein. In various embodiments, after carbonization, fibrous preform 200 may comprise a fiber volume of less than 25%. For example, in various embodiments, after carbonization, fibrous preform 200 may comprise a fiber volume of 21% or, in various embodiments, fibrous preform 200 may comprise a fiber volume of 18%. In various embodiments, the carbonized fibrous preform 200 is then densified via chemical vapor infiltration (CVI) with pyrolytic carbon at a predetermined temperature for a predetermined time interval as is known in the art, which results in a finished C/C disk or wear liner.

In various embodiments, a CMC core may be manufactured forming a fibrous preform, densifying the fibrous preform, and performing a silicon melt infiltration. In various embodiments, forming the fibrous preform include disposing a first textile layer on first plate, forming a first ceramic particle layer over a first textile layer disposing a second textile layer over the first ceramic particle layer, forming a second ceramic particle layer over the second textile layer, and disposing a third textile layer over the second ceramic particle layer. Once a desired number of textile layers and ceramic particle layers have been stacked, a second plate is located over the final textile layer. In various embodiments, a compressive load may be applied to the fibrous preform. In various embodiments, the compressive load may be applied during the densification.

In various embodiments, forming a first ceramic particle layer over a first textile layer includes locating a first shim around an outer perimeter of the first textile layer, depositing a boron carbide powder over the first textile layer, and removing any portion of the boron carbide powder that extends above an upper surface of the first shim. In various embodiments, forming a second ceramic particle layer over the second textile layer includes locating a second shim around an outer perimeter of the second textile layer, depositing a boron carbide powder over the second textile layer, and removing any portion of the boron carbide powder that extends above an upper surface of the second shim.

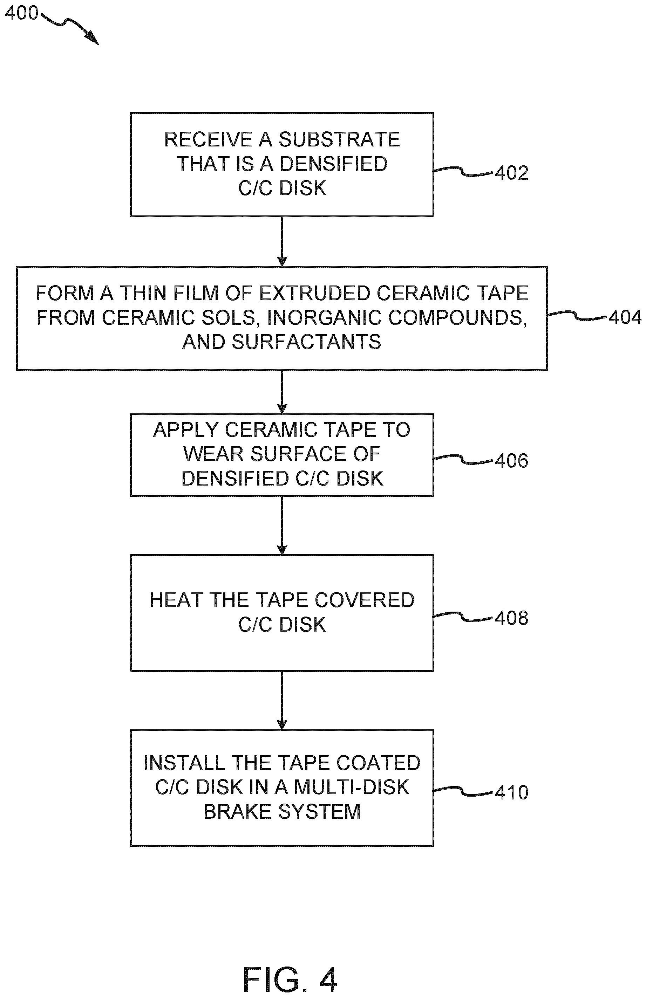

Referring now to FIG. 4, a flowchart illustrating a method 400 for decreasing brake stack or heat sink wear rate of a densified C/C substrate (e.g., a C/C disk, wear liner, etc.) and thus, increasing brake stack or heat sink brake life of the densified C/C substrate is illustrated, in accordance with various embodiments. At block 402, a brake disk that is a densified C/C substrate is received. At block 404, a thin film of extruded ceramic tape is formed from ceramic sols, inorganic compounds, and surfactants. In various embodiments, ceramic sols include nano ceramic binary oxide particulates, doped nano ceramic binary oxide particulates, and/or nano ceramic ternary oxide particulates. In various embodiments, the particulates have an average particle size of between 10 nanometers (0.3937 microinch) and 250 nanometers (9.843 microinches). In various embodiments, the particulates have an average particle size of between 10 nanometers (0.3937 microinch) and 150 nanometers (5.906 microinches). In various embodiments, the particulates have an average particle size of between 10 nanometers (0.3937 microinch) and 50 nanometers (1.969 microinches). At block 406, the thin film of extruded ceramic tape is applied to a wear surface of the densified C/C substrate. In various embodiments, the thin film of extruded ceramic tape may be applied via a tape casting process to physically coat the wear surface of the densified C/C substrate. In various embodiments, the ceramic tape may be applied using a doctor blade to extrude the ceramic tape as a thin film. The ceramic tape being drawn has a first thickness. In various embodiments, the first thickness may be about 10/1000 inch (about 0.0254 centimeter) to about 25/1000 inch (about 0.0635 centimeter), and more specifically, about 17/1000 inch (about 0.04318 centimeter). In various embodiments, additional surfactants may be added to the sol to adjust the consistency and/or viscosity of the sol to adjust working parameters, depending on which ceramic sol is used.

In various embodiments, when the ceramic tape is applied, the ceramic sols may further penetrate about 0.005 inches (about 0.0127 centimeter) to about 0.25 inches (about 0.635 centimeter) into the densified C/C substrate. In various embodiments, when the ceramic tape is applied, the ceramic sols may further penetrate about 0.025 inches (about 0.0635 centimeter) to about 0.10 inches (about 0.254 centimeter) into the densified C/C substrate. In various embodiments, when the ceramic tape is applied, the ceramic sols may further penetrate less than about 0.05 inches (about 0.127 centimeter) into the densified C/C substrate. In that regard, in various embodiments, an amount of ceramic sols applied with the ceramic tape may be about 0.025 cubic centimeters (0.001526 cubic inches) to about 3 cubic centimeters (0.1831 cubic inches) per disk wear surface. In various embodiments, an amount of ceramic sols applied with the ceramic tape may be about 0.075 cubic centimeters (0.004577 cubic inches) to about 2.5 cubic centimeters (0.1526 cubic inches) per disk wear surface. In that regard, in various embodiments, an amount of ceramic sol applied with the ceramic tape may be about 0.125 cubic centimeters (0.007628 cubic inches) to about 2 cubic centimeters (0.122 cubic inches) per disk wear surface. In various embodiments, during the operation of the brake, the nano ceramic binary oxide, doped nano ceramic binary oxide, or nano ceramic ternary oxide is mixed into the carbon wear debris as its generated which then has the ability to drastically reduce wear rates and increase brake life. In various embodiments, when other carbon wear debris oxidizes away, the already oxidized ceramics remain without needed to be regenerated like current wear debris produced from densified C/C substrate and may regenerate carbon wear debris quickly to assist in brake lubrication.

In various embodiments, the nano ceramic binary oxide particulates may include zirconium oxide (ZrO2), aluminum oxide (Al2O3), or magnesium oxide (MgO), and various combinations of the same, among others. In various embodiments, the nano ceramic binary oxide particulates may include lithium oxide (Li2O), beryllium oxide (BeO), calcium oxide (CaO), strontium oxide (SrO), or barium oxide (BaO), and various combinations of the same, among others. In various embodiments, the nano ceramic binary oxide particulates may include scandium(III) oxide (Sc2O3), yttrium oxide (Y2O3), cobalt(II) oxide (CoO), or nickel oxide (NiO), and various combinations of the same, among others. In various embodiments, the nano ceramic binary oxide particulates may include silicon oxide (SiO2), titanium oxide (TiO2), or hafnium(IV) oxide (HfO2), and various combinations of the same, among others. In various embodiments, the nano ceramic binary oxide particulates may include vanadium(II) oxide (VO), vanadium(III) oxide (V2O3), vanadium oxide (VO2), niobium(II) oxide (NbO), tantalum oxide (Ta2O5), tungsten(IV) oxide (WO2), or tungsten trioxide (WO3), and various combinations of the same, among others. In various embodiments, the nano ceramic binary oxide particulates may include gallium oxide (GaO), indium oxide (In2O3), or tin(IV) oxide (SnO2), and various combinations of the same, among others. In various embodiments, the nano ceramic binary oxide particulates may include lanthanum oxide (La2O3), cerium oxide (CeO2), praseodymium(III,IV) oxide (Pr6O11), or neodymium oxide (Nd2O3), and various combinations of the same, among others. In various embodiments, the nano ceramic binary oxide particulates may include samarium oxide (Sm2O3), europium oxide (Eu2O3), gadolinium oxide (Gd2O3), terbium oxide (Tb2O3), or dysprosium oxide (Dy2O3), and various combinations of the same, among others. In various embodiments, the nano ceramic binary oxide particulates may include holmium oxide (Ho2O3), erbium oxide (Er2O3), thulium oxide (Tm2O3), ytterbium oxide (Yb2O3), or lutetium oxide (Lu2O3), and various combinations of the same, among others. In various embodiments, the doped nano ceramic binary oxide particulates may include yttrium oxide-stabilized zirconium(IV) oxide (YSZ) or zirconium(IV) oxide toughened aluminum oxide (ZTA), and various combinations of the same, among others. In various embodiments, the nano ceramic ternary oxide particulates may include lithium silicate (Li2SiO3), mullite (Si2Al6O13), calcium silicate (Ca2SiO4), or hafnium orthosilicate (HfSiO4), and various combinations of the same, among others. In various embodiments, the nano ceramic ternary oxide particulates may include lithium titanate (Li2TiO3), aluminum titanate (Al2TiO5), calcium titanate (CaTiO3), strontium titanate (SrTiO3), barium titanate (BaTiO3), or hafnium titanate (HfTiO4), and various combinations of the same, among others. In various embodiments, the nano ceramic ternary oxide particulates may include strontium zirconate (SrZrO3) or barium zirconate (BaZrO3), and various combinations of the same, among others.

At block 408, the tape coated C/C substrate is heated. In various embodiments, the tape coated C/C substrate is heated in a carbonization run at a first temperature. In various embodiments, the first temperature is about 300° C (572 degree Fahrenheit) to about 1000° C (1832 degree Fahrenheit), and more specifically, about 400° C (752 degree Fahrenheit) to about 600° C (about 1112 degree Fahrenheit). In various embodiments, the tape coated C/C substrate is heated for about 0.25 hours to about 6 hours, and more specifically, about 0.5 hours to about 4 hours, and preferably about 2 hours. At block 410, the tape coated C/C substrate may then be installed in a multi-disk brake system, such as the multi-disk brake system 20 of FIG. 1.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Certain embodiments of the present disclosure are as follows:
1. A method for decreasing wear rate of a carbon/carbon (C/C) brake stack or a heat sink and increasing a brake life of the C/C brake stack or the heat sink, comprising:
   applying a thin film to a wear surface of a C/C substrate, the thin film including a ceramic tape, thereby forming a coated wear surface, wherein the ceramic tape comprises at least one of nano ceramic binary oxide particulates, doped nano ceramic binary oxide particulates, or nano ceramic ternary oxide particulates; and
   heating the coated wear surface to bond the ceramic tape to the wear surface of the C/C substrate.
2. The method of embodiment 1, wherein the C/C substrate is a densified C/C disk or C/C wear liner, wherein the C/C wear liner is configured to be mechanically attached to a ceramic matrix composite core material after heating the coated wear surface.
3. The method of embodiment 1, wherein the ceramic tape is about 10/1000 inch to about 25/1000 inch thick on the wear surface of the C/C substrate.
4. The method of embodiment 1, wherein the heating the coated wear surface includes heating the coated wear surface to a temperature of about 400° to about 600°C for about 0.5 hours to about 4 hours.
5. The method of embodiment 1, wherein the nano ceramic binary oxide particulates comprise at least one of zirconium oxide (ZrO₂), aluminum oxide (Al₂O₃), or magnesium oxide (MgO).
6. The method of embodiment 1, wherein the nano ceramic binary oxide particulates comprise at least one of lithium oxide (Li₂O), beryllium oxide (BeO), calcium oxide (CaO), strontium oxide (SrO), or barium oxide (BaO).
7. The method of embodiment 1, wherein the nano ceramic binary oxide particulates comprise at least one of scandium(III) oxide (Sc₂O₃), yttrium oxide (Y₂O₃), cobalt(II) oxide (CoO), or nickel oxide (NiO).
8. The method of embodiment 1, wherein the nano ceramic binary oxide particulates comprise at least one of silicon oxide (SiO₂), titanium oxide (TiO₂), or hafnium(IV) oxide (HfO₂).
9. The method of embodiment 1, wherein the nano ceramic binary oxide particulates comprise at least one of vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃).
10. The method of embodiment 1, wherein the nano ceramic binary oxide particulates comprise at least one of gallium oxide (GaO), indium oxide (In₂O₃), or tin(IV) oxide (SnO₂).
11. The method of embodiment 1, wherein the nano ceramic binary oxide particulates comprise at least one of lanthanum oxide (La₂O₃), cerium dioxide (CeO₂), praseodymium(III,IV) oxide (Pr₆O₁₁), or neodymium oxide (Nd₂O₃).
12. The method of embodiment 1, wherein the nano ceramic binary oxide particulates comprise at least one of samarium oxide (Sm₂O₃), europium oxide (Eu₂O₃), gadolinium oxide (Gd₂O₃), terbium oxide (Tb₂O₃), or dysprosium oxide (Dy₂O₃).
13. The method of embodiment 1, wherein the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).
14. The method of embodiment 1, wherein the doped nano ceramic binary oxide particulates comprise at least one of yttrium oxide stabilized zirconium(IV) oxide (YSZ) or zirconium(IV) oxide toughened aluminum oxide (ZTA).
15. The method of embodiment 1, wherein the nano ceramic ternary oxide particulates comprise at least one of lithium silicate (Li₂SiO₃), mullite (Si₂Al₆O₁₃), calcium silicate (Ca₂SiO₄), or hafnium orthosilicate (HfSiO₄).
16. The method of embodiment 1, wherein the nano ceramic ternary oxide particulates comprise at least one of lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiO₄).
17. The method of embodiment 1, wherein the nano ceramic ternary oxide particulates comprise at least one of strontium zirconate (SrZrO₃) or barium zirconate (BaZrO₃).
18. A method for decreasing a wear rate of a carbon/carbon (C/C) brake stack or a heat sink wear rate and increasing a brake life of the C/C brake stack or the heat sink, comprising:
   applying a thin film to a wear surface of a C/C disk, thereby forming coated wear surface, the thin film including a ceramic tape comprising at least one of nano ceramic binary oxide particulates, doped nano ceramic binary oxide particulates, or nano ceramic ternary oxide particulates; and
   heating the coated wear surface to bond the ceramic tape to the wear surface.
19. The method of embodiment 18, wherein the ceramic tape is about 10/1000 inch to about 25/1000 inch thick on the wear surface.
20. The method of embodiment 18, wherein the heating the coated wear surface includes heating the coated wear surface to a temperature of about 400° C to about 600° C for about 0.5 hours to about 4 hours.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method for decreasing wear rate of a carbon/carbon (C/C) brake stack or a heat sink and increasing a brake life of the C/C brake stack or the heat sink, comprising:
applying a thin film to a wear surface of a C/C substrate, the thin film including a ceramic tape, thereby forming a coated wear surface, wherein the ceramic tape comprises at least one of nano ceramic binary oxide particulates, doped nano ceramic binary oxide particulates, or nano ceramic ternary oxide particulates; and
heating the coated wear surface to bond the ceramic tape to the wear surface of the C/C substrate.

2. The method of claim 1, wherein the wear surface is the wear surface of a C/C disk.

3. The method of claim 1, wherein the C/C substrate is a densified C/C disk or C/C wear liner, wherein the C/C wear liner is configured to be mechanically attached to a ceramic matrix composite core material after heating the coated wear surface.

4. The method of any preceding claim, wherein the ceramic tape is about 10/1000 inch (about 0.0254 cm) to about 25/1000 inch (about 0.0635 cm) thick on the wear surface.

5. The method of any preceding claim, wherein the heating the coated wear surface includes heating the coated wear surface to a temperature of about 400° to about 600°C for about 0.5 hours to about 4 hours.

6. The method of any preceding claim, wherein the nano ceramic binary oxide particulates comprise at least one of zirconium oxide (ZrO₂), aluminum oxide (Al₂O₃), or magnesium oxide (MgO); and/or wherein the nano ceramic binary oxide particulates comprise at least one of lithium oxide (Li₂O), beryllium oxide (BeO), calcium oxide (CaO), strontium oxide (SrO), or barium oxide (BaO).

7. The method of any preceding claim, wherein the nano ceramic binary oxide particulates comprise at least one of scandium(III) oxide (Sc₂O₃), yttrium oxide (Y₂O₃), cobalt(II) oxide (CoO), or nickel oxide (NiO).

8. The method of any preceding claim, wherein the nano ceramic binary oxide particulates comprise at least one of silicon oxide (SiO₂), titanium oxide (TiO₂), or hafnium(IV) oxide (HfO₂).

9. The method of any preceding claim, wherein the nano ceramic binary oxide particulates comprise at least one of vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃).

10. The method of any preceding claim, wherein the nano ceramic binary oxide particulates comprise at least one of gallium oxide (GaO), indium oxide (In₂O₃), or tin(IV) oxide (SnO₂).

11. The method of any preceding claim, wherein the nano ceramic binary oxide particulates comprise at least one of lanthanum oxide (La₂O₃), cerium dioxide (CeO₂), praseodymium(III,IV) oxide (Pr₆O₁₁), or neodymium oxide (Nd₂O₃).

12. The method of any preceding claim, wherein the nano ceramic binary oxide particulates comprise at least one of samarium oxide (Sm₂O₃), europium oxide (Eu₂O₃), gadolinium oxide (Gd₂O₃), terbium oxide (Tb₂O₃), or dysprosium oxide (Dy₂O₃).

13. The method of any preceding claim, wherein the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).

14. The method of any preceding claim, wherein the doped nano ceramic binary oxide particulates comprise at least one of yttrium oxide stabilized zirconium(IV) oxide (YSZ) or zirconium(IV) oxide toughened aluminum oxide (ZTA).

15. The method of any preceding claim, wherein:
the nano ceramic ternary oxide particulates comprise at least one of lithium silicate (Li₂SiO₃), mullite (Si₂Al₆O₁₃), calcium silicate (Ca₂SiO₄), or hafnium orthosilicate (HfSiO₄); and/or
the nano ceramic ternary oxide particulates comprise at least one of lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiO₄); and/or
the nano ceramic ternary oxide particulates comprise at least one of strontium zirconate (SrZrO₃) or barium zirconate (BaZrO₃).
